# FASCICULE DE BREVET EUROPEEN

(11) **EP 2 672 814 B1**
(45) Date de publication et mention de la délivrance du brevet: **19.11.2014**
(21) Numéro de dépôt: 12708888.8
(22) Date de dépôt: 09.02.2012
(51) Int. Cl.: A01N 25/04, A01N 25/08, A01N 59/02, A01N 59/16, A01N 59/20, A01N 47/14

(54) **ÉMULSION HUILE DANS EAU OU EAU DANS L'HUILE À BASE D'HUILES VÉGÉTALES EN TANT QU'ADJUVANT PHYTOPHARMACEUTIQUE**
ÖL-IN-WASSER ODER WASSER-IN-ÖL EMULSIONEN AUF PFLANZENÖLBASIS ALS PHYTOPHARMAZEUTISCHE ADJUVENTEN
OIL-IN-WATER OR WATER-IN-OIL EMULSIONS BASED ON VEGETAL OIL AS PHYTOPHARMACEUTICAL ADJUVENTS

(30) Priorité: 10.02.2011 FR 1151096
(43) Date de publication de la demande: 18.12.2013
(73) Titulaire: Mexel Industries, 60410 Verberie (FR)
(72) Inventeur: GERUSZ, Roman, F-01960 Peronnas (FR); VANLAER, Antoine, F-75004 Paris (FR)
(74) Mandataire: Le Cloirec, Claudine
(86) Numéro de dépôt international: PCT/FR2012/050281
(87) Numéro de publication internationale: WO 2012/168584

(56) Documents cités:
- EP-A1- 2 181 820
- WO-A2-2005/020685

## Description

La présente invention se rapporte à l'utilisation d'une émulsion eau dans l'huile ou huile dans eau en tant que produit phytopharmaceutique à action mécanique ou en tant qu'adjuvant phytopharmaceutique.

La présente invention se rapporte également à une composition phytopharmaceutique comprenant l'adjuvant susmentionné.

La présente invention se rapporte aussi à l'utilisation de la composition phytopharmaceutique pour protéger les végétaux ou les produits végétaux contre tous les organismes nuisibles (insectes, champignons...) ou à prévenir leur action.

En permanence les plantes subissent les attaques d'organismes nuisibles contre lesquels elles possèdent des moyens d'autodéfenses : barrière cuticulaire, production de molécules bactéricides, fongicides, virucides en réponse à une attaque pathogène.

Malheureusement, le développement des cultures de masse, l'irrigation intensive, l'apport excessif et non équilibré d'engrais de synthèse et la mise sous serres plastiques, ont fortement favorisé la prolifération des pathogènes et ravageurs.

Pour protéger les plantes, l'agriculteur intervient directement sur les pathogènes ou ravageurs en utilisant des produits phytopharmaceutiques, encore appelés communément pesticides.

Les produits phytopharmaceutiques sont définis par la Directive 91/414/CEE comme des préparations contenant une ou plusieurs substances actives et qui sont destinées à protéger les végétaux et leurs fruits contre tous les organismes nuisibles ou à prévenir leurs actions.

En pratique, le mode de préparation et d'application par pulvérisation de ces produits phytopharmaceutiques conduit à de fortes pertes, et en conséquence à des pollutions du sol et de l'eau. On considère qu'en moyenne 20% des pertes sont dues à de mauvaises conditions de préparation et d'application, 25% sont dues à l'évaporation ou à la volatilisation due au vent et lessivage par la pluie, 25 à 30% sont perdues car projetées hors des cibles visées (feuilles, tronc, fruits ...). Au total seulement 25 % à 40 % maximum de substances actives atteignent leurs cibles.

Afin de remédier en partie à ces pertes importantes, il a été proposé des additifs correcteurs de formules phytopharmaceutiques dénommés: adjuvants phytosanitaires.

Les adjuvants phytosanitaires sont des substances dépourvues d'activité phytopharmaceutique, mais ils sont capables d'améliorer les qualités techniques des matières actives phytosanitaires, notamment ils améliorent la compatibilité et stabilité de l'émulsion ou de la solution aqueuse du produit de traitement lorsqu'ils sont ajoutés à celui-ci en mélange extemporané (dans la cuve).

Les principaux adjuvants phytosanitaires commercialisés sur le marché sont formulés en général à partir des matières de base suivantes : une huile minérale ou des alcools terpéniques, des esters sulfuriques d'alcool gras, des esters d'acides gras sulfonés, de l'abiétate diéthylèneglycol ou des triglycérides alkoxylés. Ce sont surtout les huiles minérales qui sont utilisées en tant qu'adjuvants. Les alcools terpéniques sont des allergènes pulmonaires et sont ainsi de moins en moins utilisés. Les adjuvants huileux sont en général formulés à partir d'huiles minérales paraffiniques auxquelles des tensio-actifs émulgateurs sont rajoutés. Ces huiles minérales ont démontré leur efficacité en tant qu'adjuvant phytosanitaire, mais présentent des inconvénients au niveau de leur manipulation et un contact répétitif avec la peau provoque des irritations, des inflammations, en outre elles sont toxiques et non biodégradables (bilan carbone défavorable).

Le document WO 1995 031898 décrit des compositions pesticides concentrées utilisables en agriculture et destinées à être émulsionnées avec de l'eau juste avant utilisation. Afin de viscosifier la formule finale, des dérivés siliciques, tels que des silices colloïdales précipitées ou pyrogénées, sont ajoutés. En tant qu'agent épaississant annexe, il est mentionné des produits connus de l'homme de l'art, tels que des dérivés minéraux comme les silicates (attapulgite, bentonites), des aluminosilicates de magnésium, des dérivés organiques, tels que les produits cellulosiques du type éther cellulose (carboxyméthylcellulose, hydroxypropylcellulose) ou encore des polymères, comme les gommes arabique ou de xanthane.

On connaît également de l'état de la technique le document EP 2 181 820 qui décrit une émulsion eau dans huile (e/h) ou huile dans l'eau (h/e) composée d'une phase huileuse comprenant une ou plusieurs huiles d'origine végétale et/ou minérale et/ou de synthèse, au moins un tensio-actif émulgateur non ionique et/ou anionique, et une phase aqueuse comprenant de l'eau. La phase aqueuse comprend en particulier au moins un phyllosilicate de formule Na⁺_{0,7} [(Si₈Mg_{5,5}Li_{0,3})O₂₀(OH)₄]^{-0,7} de sorte à obtenir une émulsion fluide et stable dans le temps. Cette émulsion est destinée à être utilisée en tant qu'agent de démoulage et/ou de décoffrage.

Le document WO 2005/020685 décrit des compositions pesticides à base de talc se trouvant sous forme de boues (suspensions épaisses). L'invention a pour but de proposer une nouvelle composition phytopharmaceutique qui évite tout ou partie des inconvénients précités.

A cet effet, l'invention concerne l'utilisation d'une émulsion eau dans huile (e/h) ou huile dans l'eau (h/e) composée d'une phase huileuse comprenant une ou plusieurs huiles d'origine végétale brute ou raffinée, au moins un tensio-actif émulgateur non ionique et/ou anionique, et une phase aqueuse comprenant de l'eau et au moins un phyllosilicate, en tant que produit phytopharmaceutique à action mécanique ou en tant qu'adjuvant phytopharmaceutique destiné à être associé à un actif phytopharmaceutique.

La présente invention a également pour objet une composition phytopharmaceutique comprenant au moins un actif phytopharmaceutique et au moins un adjuvant phytopharmaceutique, caractérisé en ce que ledit au moins un adjuvant phytopharmaceutique est composé d'une émulsion eau dans huile (e/h) ou huile dans l'eau (h/e) composée d'une phase huileuse comprenant une ou plusieurs huiles d'origine végétale brute ou raffinée, au moins un tensio-actif émulgateur non ionique et/ou anionique, et d'une phase aqueuse comprenant de l'eau, caractérisée en ce que la phase aqueuse comprend au moins un phyllosilicate.

Il s'est en effet avéré de manière surprenant que l'émulsion décrite ci-dessus permet seule (en tant que produit phytopharmaceutique), de part son action mécanique, et ce à l'état pur ou dilué, de prévenir l'apparition d'organismes nuisibles, par exemple en permettant l'étouffement de larves. 3L d'émulsion/hectare en dilution avec de l'eau permettent en effet de traiter les acariens sur des arbres fruitiers pendant l'hiver. De manière inattendue, l'émulsion selon l'invention agit ainsi en tant que produit phytosanitaire par action mécanique. Par « action mécanique », on entend que l'émulsion crée une barrière entre l'organisme nuisible et l'environnement extérieur empêchant tout contact avec l'air et donc avec l'oxygène de l'air ou encore l'émulsion est capable d'enrober les organismes nuisibles et donc de les étouffer et d'obstruer par exemple leurs voies respiratoires.

Combiné à un actif phytopharmaceutique classique, c'est-à-dire lorsque l'émulsion est utilisée en tant qu'adjuvant phytopharmaceutique, l'émulsion selon l'invention permet non seulement de conjuguer leurs effets, mais aussi d'émulsionner efficacement et de manière non toxique et biodégradable l'actif phytopharmaceutique. L'émulsion selon l'invention facilite également le stockage de la composition phytopharmaceutique dans le temps.

Pour la suite de la description, les composés qui vont être décrits ci-dessous conviennent à la fois pour l'invention d'utilisation en tant que produit phytopharmaceutique à action mécanique ou en tant qu'adjuvant phytopharmaceutique destiné à être associé à un actif phytopharmaceutique et pour l'invention de composition phytopharmaceutique.

L'émulsion selon la présente invention est du type huile dans eau (h/e) ou eau dans huile (e/h) et est, de préférence, non ionique.

Par définition, une émulsion est un mélange de deux substances non miscibles qui peuvent être mises en émulsion selon différentes formulations et différentes techniques de production. Chaque substance est appelée phase. Dans une émulsion, la phase sous forme de microgouttelettes est la phase discontinue, tandis que la phase qui entoure les microgouttelettes est appelée phase continue. Ainsi, une émulsion eau dans l'huile (e/h) est composée d'une phase discontinue aqueuse dispersée dans une phase continue huileuse et à l'inverse une émulsion huile dans eau (h/e) est composée d'une phase discontinue huileuse dispersée dans une phase continue aqueuse.

L'émulsion h/e ou e/h selon l'invention est en outre fluide à température ambiante (20-25 °C). La viscosité plastique BINGHAM peut aller par exemple de 5 mPa.s à 50 mPa.s, de préférence de 8 mPa.s à 30 mPas.s lorsque la viscosité est mesurée avec un appareil TVe-05 LAMY avec le système de mesure MS DIN 53019 (NF EN ISO 3219) à une température de 23°C entre une vitesse de 3 (200 tr/mn) et 2 (100 tr/mn). La modélisation BINGHAM permet en effet de caractériser un produit par sa viscosité BINGHAM qui est celle du produit mis en mouvement dans la plage de cisaillement analysée (ici, entre les vitesses 3 et 2). En effet, l'intérêt de cette modélisation est de déterminer une valeur de viscosité qui est constante, dans la plage de gradients analysée, au lieu d'avoir une multitude de viscosités apparentes, ainsi que la pression à exercer sur le produit pour le véhiculer dans cette plage de gradients.

L'émulsion selon la présente invention, comme indiquée ci-dessus, comprend dans sa phase aqueuse, en plus de l'eau, au moins un phyllosilicate.

Par phyllosilicates, on entend des minéraux du groupe des silicates, formés de particules dont les unités de base sont des feuillets infinis bidimensionnels, d'où l'appellation de silicates lamellaires. Ces feuillets ou lamelles sont constitués par l'association de couches tétraédriques d'oxygène comportant un atome de silicium ou de magnésium au centre et de couches octaédriques composées d'oxygène et d'hydroxyde comportant le plus souvent des atomes d'aluminium ou de magnésium au centre. Les deux grandes familles de phyllosilicates sont caractérisées par le type d'empilements successifs de ces couches octaédriques (O) et tétraédriques (T) :
i.) La famille des phyllosilicates 1:1 ou T:O,
ii.) La famille des phyllosilicates 1:2:1 ou T:O:T, avec pour exemple les smectites ou les illites.

Un phyllosilicate convenant pour la présente invention appartient de préférence à la famille des smectites. La demi-maille cristalline à la base des feuillets bi-dimensionnels des smectites est constituée de sept couches atomiques superposées. Le terme demi-maille est utilisé car deux feuillets sont pris en compte pour définir le motif de répétition dans la direction. Cette demi-maille se décompose en une couche d'octaèdres comprise entre deux couches de tétraèdres. Il est possible également de la décomposer en une couche médiane d'oxyde métallique, comprise entre deux couches de silice. L'enchaînement des demi-mailles dans les directions x et y forme un feuillet. La distance entre feuillets, appelée distance interfoliaire varie en fonction du type de cations « compensateurs », c'est-à-dire en fonction des substitutions isomorphes de la couche médiane de la demi-maille et de la nature géologique du sol d'extraction. Ces cations sont le plus souvent de type Li⁺, Na⁺, Ca²⁺, K⁺ et Mg²⁺ et ceux-ci vont se placer dans les sites stériquement les moins encombrés et les plus proches des centres déficitaires.

De manière préférée, le phyllosilicate selon l'invention appartient à la famille des smectites de type hectorite.

Une hectorite (feuillet élémentaire) se présente sous forme d'une plaquettes ou encore d'un disque avec une dimension latérale inférieure à 1000 nm, de préférence allant de 10 nm à 800 nm et de manière encore plus préférée ayant une dimension latérale allant de 20 nm à 100 nm +/-5 nm.

Un phyllosilicate convenant pour la présente invention peut être par exemple des pyrophylliles, des montmorillonites, des bentonites, les lucentites ou un phyllosilicate de formule général :

Na⁺_{0,7} [(Si₈Mg_{5,5}Li_{0,3})O₂₀(OH)₄]^{-0,7}.

De manière préférée, le phyllosilicate répond à la formule ci-dessous : Na⁺_{0,7} [(Si₈Mg_{5,5}Li_{0,3})O₂₀(OH)₄]^{-0,7}. La structure théorique idéale de ce phyllosilicate aurait une charge neutre avec six ions magnésium divalents dans la couche octaédrique, produisant une charge positive de douze. Toutefois, dans la pratique, certains ions magnésium sont remplacés par des ions lithium et certains espaces restent vides pour donner une composition correspondant à la formule ci-dessus.

Dans ce dernier phyllosilicate, on note que tous les sites tétraédriques sont occupés par des atomes de silicium. Deux sites octaédriques sur trois sont occupés par un atome de magnésium. Le troisième site est occupé par un atome de lithium ayant substitué le magnésium lors de la synthèse. De cette substitution d'écoule un déficit de charges positives. Pour rétablir l'électroneutralité, une compensation en charges est réalisée par l'intermédiaire de cations échangeables (Na⁺), extérieurs au feuillet, localisés dans l'espace interfoliaire et s'hydratant lors de la dispersion de la poudre dans l'eau. En raison de l'existence de ces cations échangeables, d'une part, chaque feuillet porte une charge négative et d'autre part, les particules possèdent une certaine capacité d'échange cationique (C. E. C.) La C.E.C. est de 95 meq pour 100g, le diamètre du feuillet du phyllosilicate de formule Na⁺_{0,7} [(Si₈Mg_{5,5}Li_{0,3})O₂₀(OH)₄]^{-0,7} est de 250 ± 50 °A, son épaisseur de 10 °A (0,92 nm), et sa densité de charge surfacique est S=0.014 e⁻/ °A2 (soit environ 700 charges élémentaires par face).

En effet, il a été trouvé que l'efficacité stabilisante des phyllosilicates spécifiques était reliée non seulement à leur composition chimique et cristallographique spéciale, mais aussi à leur polarité ionique globale négative après dispersion dans l'eau. En particulier, la stabilité est améliorée avec un phyllosilicate présentant une insuffisance de charge électrique de 0,7 comme le phyllosilicate de formule [(Si₈Mg_{5,5}Li_{0,3})O₂₀(OH)₄]^{-0,7}. Afin de maîtriser la qualité de ce type de phyllosilicate spécifique, il est préférable de les obtenir par synthèse à partir de composants de base purs et réguliers. Les feuillets obtenus par synthèse seront de préférence broyés pour obtenir un produit de phyllosilicate pulvérulent, sec et facile à stocker.

De plus, contrairement aux émulsions contenant des épaississants classiques organiques comme le xanthane, la stabilisation des émulsions selon la présente invention n'est pas affectée par les variations de température.

La phase aqueuse de l'émulsion selon l'invention comprend avantageusement, un adjuvant hydrophile.

De même, il est en effet possible de rajouter à la phase aqueuse et également à faible dose, de l'ordre de 0,001% à 2% en poids par rapport au poids total de l'émulsion, des adjuvants hydrophiles, tels que des agents de protection biocide, des dispersants, des chélatants, des antioxydants, des agents épaississants, des agents de conservation (comme un dérivé isothiazolone), etc, bien connus de l'homme de l'art. Les adjuvants utilisés sont de préférence biodégradables et liquides à température ambiante ( 20°C).

La phase huileuse de l'émulsion selon l'invention comprend comme indiquée ci-dessus au moins une huile d'origine végétale brute ou raffinée et au moins un tensio-actif émulgateur.

Préférentiellement, l'huile végétale de l'émulsion e/h ou h/e est choisie parmi : l'huile de colza, de soja, de tournesol, d'olive, de palme, d'arachide, de jojoba, de coprah, et l'huile de jatropha, ou un de leurs mélanges.

De manière avantageuse, le tensio-actif émulgateur non ionique et/ou anionique selon l'invention est choisi parmi : un liquide à température ambiante (aux alentours de 20-25°C), biodégradable et réalisé sur base végétale, et un biosurfactant, ou un de leurs mélanges.

En particulier, le tensio-actif émulgateur non ionique est choisi parmi un alcool gras éthoxylé, un ester d'acides gras et polyols, un ester de sorbitan, un ester de sorbitan polyéthoxylé, une huile de ricin éthoxylée, un alcool gras alcoxylé, un alkyl polyglucoside, et un surfactant polymérique, ou un de leurs mélanges, et le tensio-actif émulgateur anionique est choisi parmi un sel alcalin d'acides gras et résiniques, un alkylarylsulfonate, un alkylsulfosuccinate, un alkyl sulfate, un alkyl éther sulfate, un amide d'éther sulfate, et un dérivé dodécylbenzène sulfonique, ou un de leurs mélanges.

Le tensio-actif émulgateur non ioniques ou anioniques peut être également choisi parmi les biosurfactants. En particulier, les lécithines de soja, lécithines d'oeufs, les surfactants polysaccharides-protéines, et les exopolysaccharides (EPS) comme le xanthane, ou un de leurs mélanges conviennent pour la présente invention.

De préférence, la phase huileuse comprend au moins un adjuvant oléophile. Il est en effet possible de rajouter à la phase huileuse et à faible dose, par exemple de l'ordre de 0,001% à 2% en poids par rapport au poids total de l'émulsion, des adjuvants oléophiles, tels que des anti-mousses, des anti-gels, des agents anti-oxydation, des traceurs colorés, etc, bien connus de l'homme de l'art.

De manière préférentielle, par rapport au poids total de l'émulsion eau dans huile (e/h) ou huile dans l'eau (h/e), la ou les huiles représentent, en poids, 10 % à 80 %, le tensio-actif émulgateur représente, en poids, 0,5 % à 20 %, l'eau représente, en poids, 10 % à 90 % et le phyllosilicate représente en poids de 0,01 % à 20 %. De manière encore plus avantageuse, les huiles végétales représentent en poids, 5 % à 50% et le tensio-actif émulgateur représente en poids, 0,5% à 20% par rapport au poids total de l'émulsion huile dans l'eau (h/e).

Lorsque l'adjuvant phytopharmaceutique est destiné à être associé à un actif phytopharmaceutique, cet actif est préférentiellement choisi parmi : un insecticide (pyrhéthrine, cyperméthrine, bifenthrine, *organo-phosphate* comme chlorpiriphos), un fongicide (hydroxyde de cuivre, sulfate de cuivre, soufre mouillable, dithiocarbamate de zinc et manganèse (mancozèbe), morpholine, strobilurine), un herbicide (glyphosate, aminotriazole), un bactéricide et un régulateur de croissance (le trinéxapac-éthyl, l'ethéphon, le chlorure de chlorocholine, le chlorméquat, le chlorure de choline, le prohexadione, le mepiquat, le trinéxapac-éthyl, le tébuconazole, le metconazole, le chlorprophame, l'huile de *Mentha spicata,* l'acide b-indole butyrique, l'alpha-naphtyl acetamide, l'acide gibberellique), ou un de leurs mélanges.

Lorsque la présente invention a pour objet la composition phytopharmaceutique, celle-ci comprend de l'eau.

En particulier, par rapport au poids total de la composition phytopharmaceutique (incluant l'eau), ledit au moins adjuvant phytopharmaceutique représente, en poids, 0,05% à 70% et ledit actif phytopharmaceutique représente 0,05% à 10% en poids, et l'eau représente 20% à 99,9% en poids. Les pourcentages ci-dessus dépendent de l'action désirée et donc de l'emploi d'un herbicide, fongicide ou insecticide, mais aussi du type de culture et des plantes à traiter (par exemple, betterave ou banane) et sont très variables selon les cas envisagés.

Généralement, l'utilisateur (agriculteur) pulvérisera de 0,5 litres à 20 litres (L) à l'hectare de produit actif phytopharmaceutique, 2 litres à 20 litres par hectare d'émulsion pure selon l'invention, le tout pouvant être diluée avec 0% à 90% d'eau et ce, suivant le type d'application (pulvérisateurs manuels ou par avion).

Afin d'obtenir une émulsion telle que décrite ci-dessus qui soit homogène, un procédé convenant pour la présente invention peut être le suivant et comprendre les étapes ci-dessous:
(i) préparer la phase huileuse en mélangeant les composés rentrant dans la phase huileuse comme au moins une ou plusieurs huiles d'origine végétale et un tensio-actif émulgateur non ionique et/ou anionique,
(ii) préparer la phase aqueuse en mélangeant les composés rentrant dans la phase aqueuse comme au moins l'eau (de préférence désionisée ou adoucie) et le phyllosilicate,
(iii) mélanger en continu ou en discontinu, la phase huileuse et la phase aqueuse dans un disperseur/émulsionneur.

On entend par disperseur ou émulsionneur, un dispositif permettant de mélanger, cisailler, émulsionner efficacement les émulsions, de sorte à obtenir des émulsions à globules fins.

Le procédé tel que décrit ci-dessus permet d'obtenir des émulsions homogènes et régulières en continu, toutefois, il est également possible de réaliser les émulsions selon l'invention en discontinu (procédé par lots).

Le procédé de préparation des émulsions selon l'invention présente de plus les avantages d'être simple et économique. En effet, il est inutile par exemple de réaliser des inversions de phase qui nécessitent de chauffer à haute température (aux alentours de 90°C) les phases huile et eau, et donc d'accroître les coûts de fabrication.

C'est pourquoi le mélange des phases s'effectue à température ambiante. Il n'y a pas d'inversion de phase.

De manière encore plus particulière, le mélange des phases s'effectue aux environs de 20 à 25°C.

Comme susmentionné, le ou les phyllosilicates pourront être préalablement conditionnés sous forme de gel ou de sol fluide.

Il est également possible de concentrer l'émulsion selon la présente invention. Pour cela, il suffit de :
(i) dissoudre le phyllosilicate dans un minimum d'eau (de préférence désionisée ou adoucie) de sorte à former un gel ou un sol fluide,
(ii) de mélanger au moins une ou plusieurs huiles d'origine végétale et un tensio-actif émulgateur non ionique et/ou anionique de la phase huileuse,
(iii) de mélanger le mélange obtenu à l'étape (i) avec celui obtenu à l'étape (ii).

Les huiles végétales convenant pour la présente invention sont notamment : l'huile de colza, l'huile de soja, l'huile de tournesol, l'huile d'olive, l'huile de palme, l'huile d'arachide, l'huile de jojoba, l'huile de coprah, et l'huile de jatropha, ou un de leurs mélanges.

En particulier, l'huile de palme est préférée avec l'huile de colza.

Avantageusement, ces huiles sont brutes mais purifiées. Par purifiées, on entend que ces huiles ont été au préalable au moins filtrées.

L'huile de palme est une huile grasse obtenue à partir de la pulpe et des noyaux des fruits du palmier dont le plus courant est *l'Elaeis guineensis.* L'extraction est réalisée à chaud par différents procédés mécaniques ou par extraction aux solvants du type hexane. Du fait que l'huile de palme fige à température ambiante, le stockage et conditionnement sont réalisés à chaud (45°C à 60°C). L'huile de palme crue obtenue est alors clarifiée par décantation et filtrée. A ce stade, elle est commercialisée sous l'appellation CPO (Crude Palm Oil). Le CPO a une couleur jaune orangé et sa composition est riche en acides gras (palmitique, stéarique, oléique, linoléique), en triglycérides, et elle contient aussi des caroténoïdes, vitamines et oligo-éléments.

Ces huiles de palme CPO sont donc de compositions complexes et très variables selon l'origine ou sélection des palmiers, selon le lieu et mode de culture et selon le mode d'extraction en production. Quels que soient les origines et modes d'extractions des huiles de palme, ces huiles CPO sont toujours caractérisées par leur couleur intense jaune orangé et par leur point de fusion élevé (35°C à 40°C) ; elles figent donc à température ordinaire (20°C) et ne sont donc pas utilisable telles quelles sans chauffage préalable et maintenu.

Pour le domaine alimentaire, ces huiles de palme CPO sont généralement raffinées, blanchies, et commercialisées sous l'appellation RBD (Refined, Bleached, Desodorizided). Les huiles de palme RBD sont de couleur neutre ou incolore, sans odeur, mais leur point de fusion est toujours aussi élevé que celui des CPO (35°C à 38°C). En utilisation alimentaire, on utilise les huiles de palme RBD soit sous forme solide (pour fritures), soit sous forme d'émulsions type eau dans huile pour réaliser par exemple des margarines.

Des essais de réalisations d'émulsions fluides d'huile de palme RBD du type Huile dans Eau ont été réalisés à l'Institut de Recherches PORIM à Kuala Lumpur en Malaisie en 1996 par Chow et Ho (cf. JAOCS, Vol .73 n°1 - 1996). Ces chercheurs ont mis en évidence les difficultés de stabilisation de ce type d'émulsion huile dans eau, et ont souligné l'importance des variables dues aux compositions complexes des huiles de palme RBD.

Les autres composants de l'émulsion selon l'invention ont été présentés dans la partie résumé et ne seront, par conséquent, pas plus décrits.

Un but de la présente invention concerne également l'utilisation de la composition phytopharmaceutique décrite ci-dessus pour traiter les plantes contre des organismes nuisibles.

Pour mieux faire comprendre l'objet de l'invention, un appareil susceptible de permettre l'obtention des émulsions selon l'invention va être décrit, d'une part, et d'autre part, des exemples de réalisation desdites émulsions vont être décrits (exemples 1 à 3). Enfin, des tests d'efficacité de ladite émulsion vont être présentés (exemples 4 à 8). Les descriptions qui vont suivre sont données à titre d'exemples purement illustratifs et non limitatifs ; le dessin de l'appareil émulsionneur est un dessin schématique destiné uniquement à illustrer le principe de l'appareil mis en oeuvre pour la réalisation des exemples des émulsions selon l'invention.

Sur le dessin :
- la figure 1 représente, en coupe axiale, un appareil émulsionneur permettant d'obtenir les compositions selon l'invention ;
- la figure 2 est une représentation partielle et schématique des palettes du rotor et du stator, palettes dont la coopération permet l'obtention d'un fort taux de cisaillement et, en conséquence, d'une émulsion suffisamment fine pour entrer dans le cadre de la présente invention ; et
- la figure 3 correspond à un plan qui reprend le dispositif expérimental de la station de recherche ILVO à Merelbeke en Belgique mis en oeuvre dans l'exemple 7.

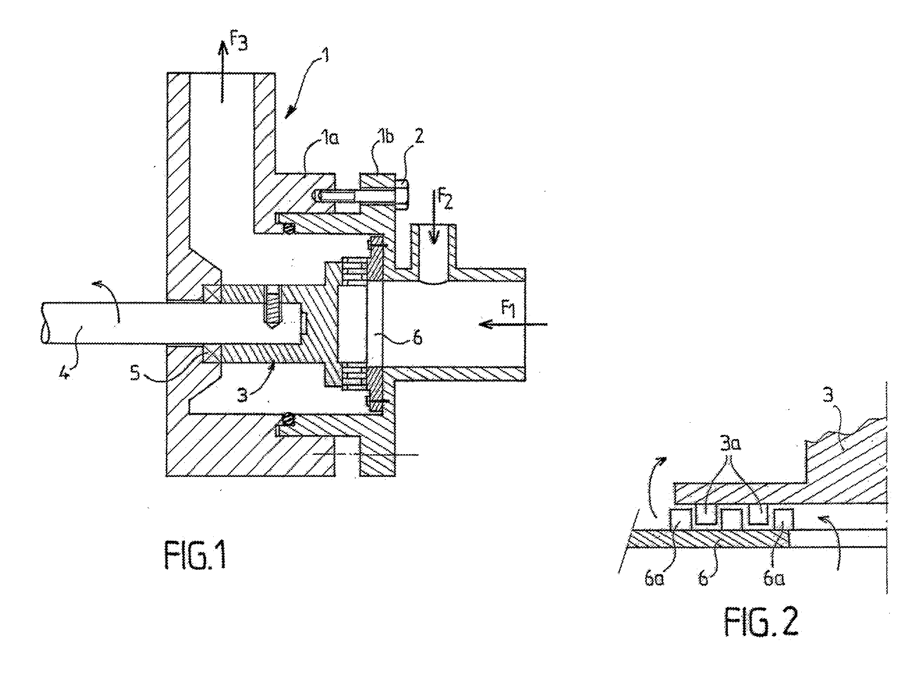

Bien que l'appareil émulsionneur représenté sur les figures 1 et 2 ne fasse pas partie de l'invention, on va en donner ci-après une rapide description. On a désigné par 1 dans son ensemble le stator de l'émulsionneur. Le stator 1 est constitué essentiellement de deux parties 1a et 1b assemblées l'une à l'autre au moyen de goujons 2. Le stator 1 reçoit un rotor désigné par 3 dans son ensemble, le rotor 3 étant entraîné en rotation par rapport au stator par un arbre 4. La rotation du rotor 3 et de l'arbre 4 par rapport au stator 1 est permise grâce à un système de paliers étanches 5.

La partie 1b du stator comporte les canalisations d'arrivée des produits destinés à constituer l'émulsion : par exemple la phase aqueuse est envoyée selon la flèche F1 et la phase huileuse de l'émulsion est envoyée selon la flèche F2 (ou inversement). L'ensemble pénètre dans le stator qui comporte un porte-lames circulaire 6 fixé par des vis sur la partie 1b du stator, les lames 6a du porte-lames 6 étant radiales et dirigées du côté du rotor 3, c'est-à-dire du côté opposé à l'arrivée des produits à émulsionner. L'extrémité du rotor 3 qui fait vis-à-vis au porte-lames 6 a la forme d'un plateau qui porte des lames radiales 3a. Les lames 3a et 6a sont disposées selon des cercles concentriques, les lames 3a étant situées dans les espaces annulaires circulaires, qui existent entre deux cercles successifs de lames 6a.

Les produits à émulsionner entrent dans la zone comprise entre le porte-lames 6 et le rotor 3 par un orifice circulaire central du porte-lames 6, traversent de façon centrifuge l'espace compris entre le porte-lames 6 et le rotor 3 et sont éjectés à la périphérie dudit espace pour pouvoir être évacués hors de l'appareil selon la flèche F3. Il est clair que le flux de produits entrants subit des cisaillements successifs entre les lames fixes 6a et les lames 3a entraînées en rotation par l'arbre 4. De façon connue, la finesse de l'émulsion obtenue est fonction, notamment, du nombre de cercles concentriques de lames 3a et 6a, de l'espace radial entre les bordures desdites lames et de la vitesse de rotation de l'arbre 4. En d'autres termes, pour un appareil donné et un débit donné, les caractéristiques de l'émulsion obtenue sont fonction de la vitesse de rotation du rotor.

De préférence, une vitesse de rotation de l'ordre de 6 500 tours/minute convient pour obtenir des émulsions fluides selon la présente invention.

Maintenant, des exemples d'émulsion selon l'invention purement illustratifs et non limitatifs de la portée de l'invention vont être décrits.

### Exemple -1 : Emulsion à base d'huile de palme CPO

| Composition | % en poids |
|---|---|
| Phase huileuse | |
| - huile de palme CPO (huile végétale) | 30,00 |
| - Alcools gras éthoxylés (tensio-actif émulgateur) | 5,50 |
| - une huile de ricin éthoxylée (tensio-actif émulgateur) | 2,50 |

| Phase aqueuse | |
|---|---|
| - eau désionisée | 61,16 |
| - Na⁺_{0,7} [(Si₈Mg_{5,5}Li_{0,3})O₂₀(OH)₄]^{-0,7} | 0,80 |
| - benzoate de soude (agent de conservation) | 0,04 |
| Total | 100,00 |

### Exemple -2 : Emulsion à base d'huile de palme RBD

| Composition | % en poids |
|---|---|
| Phase huileuse | |
| - huile de palme RBD (huile végétale) | 30,00 |
| - esters d'acides gras polyéthyléné | 6,00 |
| - une huile de ricin éthoxylée | 1,50 |

| Phase aqueuse | |
|---|---|
| - eau désionisée | 61,66 |
| - Na⁺_{0,7} [(Si₈Mg_{5,5}Li_{0,3})O₂₀(OH)₄]^{-0,7} | 0,80 |
| - Dérivé isothiazolone (agent de conservation) | 0,04 |
| Total | 100,00 |

### Exemple -3 : Emulsion à base d'huile de colza brute purifiée

| Composition | % en poids |
|---|---|
| Phase huileuse | |
| - huile de colza (huile végétale) | 34,98 |
| - esters d'acide gras | 5,5 |
| - huile de ricin | 2,5 |

| Phase aqueuse | |
|---|---|
| - eau désionisée | 56,38 |
| - Na⁺_{0,7} [(Si₈Mg_{5,5}Li_{0,3})O₂₀(OH)₄]^{-0,7} | 0,6 |
| - Dérivé isothiazolone | 0,04 |
| Total | 100,00 |

### Exemple -4: Essais préalables de compatibilité des émulsions ci-dessus (exemples 1 à 3) avec des substances actives phytopharmaceutiques

Diverses substances actives phytopharmaceutiques ont été testées afin de savoir si elles étaient compatibles avec les émulsions selon la présente invention.

Ces substances actives sont les suivantes :

| substances actives agrées AB (Agriculture Biologique) | substances actives agrées uniquement agriculture conventionnelle |
|---|---|
| -soufre mouillable (Microthiol Special Disperss - Cerexagri) | - mancozèbe |
| -bouillie bordelaise (RSR -20% Cuivre - Cerexagri) | |
| -sulfate de zinc | |

Pour cela, les émulsions des exemples 1 à 3 ont été réalisées selon le procédé susmentionné. 1 L de chacune des émulsions a ensuite été dilué avec 0,25L d'eau (1/4 de volume d'eau supplémentaire). 1% de chaque substance active ci-dessus (pourcentage en poids, par rapport au poids totale de l'émulsion diluée) a ensuite été mélangé avec chacune des émulsions diluées.

Dans tous les exemples réalisés, il a été obtenu un mélange homogène et stable au moins pendant 24 heures.

### Exemple -5: Tests d'efficacité en arboriculture (petits et gros fruits) et comparatif avec des produits phytopharmaceutiques de l'art antérieur (tous les tests ont été réalisés de manière confidentielle).

Les objectifs visés par ce test sont de prévenir le développement, à savoir la contamination primaire, de la tavelure sur le pommier et le poirier, et de prévenir également la cloque du pêcher ou des groseilliers.

L'essai comparatif a été mené avec une huile blanche (817 g/l d'huiles minérales) insecticide, toutes cultures, préconisées dans les traitements d'hiver et de printemps des arbres fruitiers et dans la lutte annuelle contre les cochenilles des agrumes. Cette huile blanche est commercialisée sous la marque Acakill® par la société C.C.L.

### Test A : Traitement de groseilliers sur une période de deux mois (mars et avril 2010) pendant le stade phénologique A et B des bourgeons.

Pour ce test, l'émulsion de l'exemple 1 a été utilisée (30% d'huile de palme). 1L de cette émulsion a ensuite été dilué avec 0,25L d'eau (1/4 de volume d'eau ajouté). Pour ce test A, l'émulsion selon l'invention est utilisée seule en tant que produit phytopharmaceutique à action mécanique (à savoir afin d'étouffer et de prévenir le développement de parasites latents), c'est à dire sans actif phytopharmaceutique supplémentaire.

1L d'huile blanche de l'art antérieur a également été dilué avec 0,25 L d'eau supplémentaire (1/4 de volume en eau ajouté).

Une rangée A de groseilliers a été traitée avec l'émulsion selon l'invention, une rangée B a été traitée avec l'huile blanche de l'art antérieure et une rangée C n'a pas été traitée du tout. L'application des produits a été réalisée par pulvérisation.

Au bout de deux mois (mois de mai), il a été observé sur la rangée de groseilliers C (témoin) que quelques feuilles étaient cloquées et boursouflées, tandis que pour la rangée A traitée avec l'émulsion selon l'invention et la rangée B traitée avec un produit de l'art antérieur, aucune feuille cloquée ou boursouflée n'a été observée.

Par conséquent, l'émulsion selon l'invention est tout aussi efficace qu'un produit de l'art antérieur en tant que produit phytopharmaceutique à action mécanique (asphyxie des larves, des pucerons), et notamment pour traiter les cloques des groseilliers.

### Test B : Traitement tous les 15 jours de pommiers, poiriers et pêchers sur une période de 3 mois (avril à juin 2010) pendant le stade phénologique E2 à F2 (hors floraisons).

Pour ce test B, l'émulsion selon l'invention a été utilisée en tant qu'adjuvant phytopharmaceutique. 1L de solution de l'exemple 2 a été utilisé (30% d'huile de palme) et a été dilué avec 30L d'eau et 100 grammes de soufre mouillable (produit selon l'invention).

1L d'huile blanche (80% d'huile) selon l'art antérieur) a également été diluée avec 30L d'eau et 100 grammes de soufre mouillable (produit comparatif) à titre de comparaison.

Pour chaque produit (selon l'invention et pour le produit comparatif), une rangée de pommiers, poiriers et pêchers a été traitée par pulvérisation. De plus, une rangée de ces arbres fruitiers n'a pas été traitée à titre de rangée témoin.

Au bout de trois mois (mois de juillet), il a été observé sur les poiriers et pommiers témoins, des feuilles tavelées (présentant des taches foncées) et des fruits piqués (taches en relief), tandis que pour les rangées traitées avec le produit selon l'invention ou selon l'art antérieur, il a été observé pratiquement pas de feuilles tavelées ou de fruits piqués. Concernant les rangées de pêchers, pour la rangée témoin non traitée, la présence de nombreuses feuilles cloquées a été répertoriée, tandis que les rangées traitées avec le produit selon l'invention ou le produit selon l'art antérieur (comparatif) ne présentent pas de feuilles cloquées.

Par conséquent, une émulsion à base d'huiles végétales comme l'huile de palme (30% d'huile) peut se substituer à une huile blanche (80% huile paraffiniques) en application adjuvant phytosanitaire.

### Exemple 6 : Test d'efficacité en traitement préventif phytosanitaire de plantations de bananiers et comparatif (tous les tests ont été réalisés de manière confidentielle).

Les objectifs visés par ce test sont de prévenir le développement du champignon sigatoka jaune *(Mycosphaerella musicola)* et de prévenir le développement du sigatoka noir *(Mycosphaerella fijiensis).*

L'essai comparatif a été mené à partir d'une huile blanche (HB) type Banole HV® (huile minérale paraffinique : 825 gr /litre, soit environ 80% d'huile) commercialisée par la société Total. 11 L de cette huile blanche ont été dilués avec 4 L d'eau, 0,1 L d'un émulgateur : polyéthylène glycol 4-tert-octyl phényl éther (Triton X45® de chez Dow), et 0,4 L de fongicide pur (mancozèbe) pour obtenir 15,5 Litres d'une solution selon l'art antérieur (la préparation et le dosage de l'huile blanche correspond à ce qui est d'usage courant). Cette composition est destinée à être pulvérisée 15,5L/hectare.

La composition phytopharmaceutique selon l'invention a été préparée à partir de : 4 L d'émulsion selon l'exemple 1 (30% d'huile) qui ont été dilués avec 11,1 L d'eau et 0,4 L de fongicide pur (mancozèbe) pour obtenir 15,5 litres d'une composition phytopharmaceutique. Cette composition est destinée également à être répandue 15,5 L/hectare.

Ces tests ont été réalisés sur une plantation privée de bananiers du 15 décembre 2009 à fin mai 2010. 10 hectares ont été traités par pulvérisation par avion pour chaque produit : composition selon l'invention et composition de l'art antérieur (exemple comparatif). En tout, il y a eu 10 pulvérisations sur chacun des 10 hectares traités.

L'observation a consisté à regarder l'éventuel développement de taches dues à la présente des champignons sigatoka jaune et/ou noir.

Après quatre pulvérisations, il a été constaté de bons résultats avec la composition phytopharmaceutique selon l'invention, pratiquement identique à la zone témoin traitée avec la composition selon l'art antérieur.

Après huit pulvérisations, les hectares traités avec la composition selon l'invention semblent meilleurs comparativement aux hectares traités avec la composition selon l'art antérieur.

Après dix pulvérisations, la protection des hectares traités avec la composition selon l'invention serait meilleure comparativement à celle des hectares traitée avec la composition selon l'art antérieur.

De plus, il est estimé que la productivité (volume et nombre de bananes par régime) serait meilleure sur la zone traitée par la composition selon l'invention comparativement à la zone témoin traitée selon l'art antérieur ; cela étant dû probablement à la non toxicité et à la biodégradabilité de l'émulsion selon l'invention. Une publication issue de Scienta Horticulturae, vol.56, issu 2, December 93, p 107-117,de Jordan Valley Banana Reserch Station, a déjà montré qu'un taux élevé d'huile minérale réduisait le taux de croissance des bananes, leur floraison était retardée de quatre jours et la grappe de bananes perdait 5,6% en poids durant la première année de production et 8,4% pendant la seconde année de production, par rapport à un échantillon témoin non traité.

### Exemple 7 : Test d'efficacité de l'émulsion selon l'invention en tant qu'adjuvant phytopharmaceutique pour le traitement préventif en pulvérisation foliaire sur une culture de poireau en plein champ après inoculation artificielle de Pseudomonas syringae pv. porri.

L'objet de cette expérimentation est d'évaluer l'aptitude d'une émulsion selon l'invention à augmenter l'efficacité du sulfate de cuivre (substance active) pulvérisé en préventif contre la "graisse bactérienne" de poireau provoqué par *Pseudomonas syringae* pv *porri.*

Le choix de l'espèce traitée est déterminant dans la mesure où la feuille de poireau est particulièrement "creuse" ce qui limite très fortement l'adhérence des produits sur ce type de feuillage.

Des poireaux sont repiqués au champ en parcelle d'essai. Ils sont traités de manière préventive par pulvérisation foliaire avec les différentes modalités (voir ci-dessous) et inoculés ensuite avec une suspension bactérienne de *Pseudomonas syringae* pv *porri.* Une lecture est réalisée après 8 semaines de culture au champ par l'observation des symptômes de la maladie sur les feuilles.

### Dispositif expérimental et observations

### Les produits :

L'émulsion selon l'invention présente la composition suivante :

| Composition | % en poids |
|---|---|
| **Phase huileuse** | |
| huile de colza (huile végétale) | 26.985 |
| Mélange d'huile de colza éthoxylée et d'huile de ricin éthoxylée | 4,6 |
| | |

| **Phase aqueuse** | |
|---|---|
| eau désionisée | 65,25 |
| Glycérol | 2,00 |
| Na⁺_{0,7} [(Si₈Mg_{5,5}Li_{0,3})O₂₀(OH)₄]^{-0,7} | 0,95 |
| Dérivé isothiazolone | 0,2 |
| Mélange de tocophérols (antioxydant) | 0,015 |
| Total | 100,00 |

Le sulfate de cuivre, ainsi que le produit Phyton^{®} 27 (matière active comprenant 21 % de pentahydrate de sulfate de cuivre et 5,5 % de cuivre métallique) sont fournis par l'ILVO (Institut de Recherche de l'Agriculture et de la Pêche en Blegique).

Le matériel végétal est *Allium porrum* cv. Harston. Il est au stade jeune plant à repiquer et est sain.

La souche de *Pseudomonas syringae* pv *porri* est GBBC 988, isolée en 2011 de plantules de poireau produites au Maroc (Agadir)

### Les facteurs de variabilité sont les suivants :

La **modalité 1 (M1)** est le témoin négatif : les plantes sont traitées à l'eau.
La **modalité 2 (M2)** correspond aux plantes traitées avec du sulfate de cuivre dilué dans de l'eau (encore appelé bouillie de traitement). Le dosage est le suivant : 600 g de sulfate de cuivre pour 100 L d'eau (soit une concentration de sulfate de cuivre de 6g/L).
Les **modalités 5 (M5), 6 (M6) et 7 (M7)** sont équivalentes à la modalité 2 (6 g de sulfate de cuivre par litre de bouillie) à laquelle a été ajoutée une dose croissante de l'émulsion selon l'invention (respectivement 2,5 mL (0,25%), 0,5 mL (0,5%) et 10 mL (1%) pour 1 L de bouillie de traitement. L'émulsion a été obtenue en suivant la composition du tableau ci-dessus.
La **modalité 8 (M8)** correspond à un témoin positif qui a été traité avec du Phyton^{®} 27 de manière à obtenir une bouillie comprenant 0,12 % de Phyton^{®}27 (soit la bouillie de traitement comprend 1,2 mL de Phyton^{®}27 pour 1 L).

Les modalités 3 et 4 initialement prévues n'ont pas été appliquées car tout ces essais ont subit un lessivage naturel par les pluies.

L'essai comporte ainsi au total six modalités, témoins inclus (modalités 1 et 8). Chaque modalité a été répétée deux fois dans un dispositif en blocs aléatoires complets.

### Description des unités expérimentales:

Chaque unité expérimentale est constituée de 12 plantes (3 lignes de 4 plantes).

L'inoculation bactérienne est réalisée en plein champ avec une suspension de *Pseudomonas syringae* pv *porri* contenant 10⁹ cellules par litre. La suspension a été nébulisée sous pression (8 bar) à raison de 100 ml par unité expérimentale.

### Localisation de l'essai

L'essai a été réalisé dans les parcelles expérimentales de la station de recherche de l'ILVO à Merelbeke en Belgique.

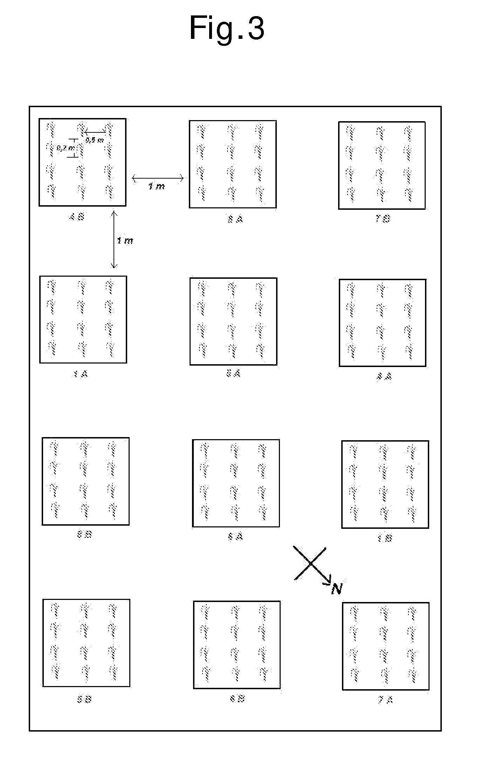

Le plan représenté sur la figure 3 reprend le dispositif expérimental au champ et représente les plans traités suivant les différentes modalités.

### Mise en place et réalisation de l'essai :

14 septembre 2011 = jour J :
   - Repiquage des plants de poireaux selon le dispositif du plan 21 septembre 2011 = jour J+ 7
   - Traitement préventif des plantes suivant les différentes modalités. Les traitements sont réalisés avec un pulvérisateur à main jusqu'à saturation du feuillage (formation de gouttes et écoulement au bas des feuilles).
Du 21 septembre 2011 au 27 septembre = 7 jours
   - Arrosage des plantes = lessivage naturelle de 15 mm d'eau (3 x 5 mm)
28 septembre 2011 = jour j + 14
   - Inoculation des plantes avec nébulisateur portable Du 28 septembre au 24 novembre 2011 = 57 jours
   - Développement de l'infection bactérienne
24 novembre 2011 = jour j + 71
   - Recolte
   - Lecture de l'essai

Une analyse statistique selon le test de Turkey a également été réalisée afin d'évaluer la présence ou non de différences significatives entre le pourcentage d'infection obtenu selon les différentes modalités.

### Résultats de l'essai

| modalité | Produit | mouillant | Nbr. total de feuilles par objet | Nbr. Total de feuilles positives par objet | % d'infection | Différence significative |
|---|---|---|---|---|---|---|
| M1A | Eau | 0 | 62 | 37 | 60 | a |
| M1B | | | 56 | 31 | 55 | a |
| 2 | | | | | | |
| 3 | | | | | | |
| M4A | CuSO₄ | 0 | 56 | 29 | 52 | b |
| M4B | | | 59 | 29 | 49 | b |
| M5A | CuSO₄ | 0,25% | 51 | 18 | 35 | b |
| M5B | | | 46 | 17 | 37 | b |
| M6A | CuSO₄ | 0,50% | 54 | 17 | 31 | C |
| M6B | | | 51 | 16 | 31 | C |
| M7A | CuSO₄ | 1,00% | 51 | 13 | 25 | C |
| M7B | | | 55 | 15 | 27 | C |
| M8A | Phyton | 0 | 55 | 10 | 18 | C |
| M8B | | | 52 | 11 | 21 | C |

L'objectif de l'essai était d'évaluer l'aptitude d'un mouillant à base d'huile de colza à augmenter l'efficacité d'une bouillie bordelaise appliquée de manière préventive contre "la graisse bactérienne" sur poireau.

Les résultats obtenus à partir des témoins positif et négatif permettent de valider l'essai.

En effet, on observe que la modalité 1 a plus de 57 % de feuilles attaquées. Par contre, l'application du produit témoin positif (modalité 8) ne montre que 20 % de feuilles attaquées.

La modalité 4 arrivant à un taux d'infection élevé de plus de 50 %, tente à démontrer que le sulfate de cuivre sans mouillant n'a que peu d'effet.

Par contre les modalités 5, 6 et 7 expriment un gradient de protection qui s'élève par rapport à la concentration du mouillant. Un pas de + 5 % de feuilles non infectées se marque entre chaque concentration.

En résumé, les différences significatives entre les modalités sont les suivantes (test statistique): M1 M4 M5 M6 M7 M8 = "a" "ab" "bc" "c" "c" "c". Ainsi, il n'y a pas de différence significative entre les modalités M6, M7 et M8 : le sulfate de cuivre avec le mouillant à 0,5% ou 1% se montre équivalent au produit de référence (Phyton^{®} 27).

En conclusion, on observe que l'addition de mouillant apporte, dans les conditions de cet essai, une meilleure protection contre la graisse bactérienne sur poireau. On observe que le dosage du produit a, dans ce cas, révélé des différences significatives entre 0,25 %, 0,5 % et 1% en montrant une protection accrue pour des doses de 0,5% et de 1.0%

### Exemple 8: Evaluation de l'aptitude de l'émulsion selon l'invention en tant qu'adjuvant phytopharmaceutique à augmenter l'efficacité de la protection fongicide en présence de lessivage par la pluie dans le cadre de la lutte contre le mildiou de la pomme de terre.

L'objet de cette expérimentation est d'évaluer l'aptitude d'un mouillant à augmenter l'efficacité de la protection fongicide en présence de lessivage par la pluie dans le cadre de la lutte contre le mildiou de la pomme de terre, *Phytophthora infestans.*

Des minitubercules issus de culture hydroponique sont élevés en chambre conditionnée pendant six semaines. Après cette période, les plantes sont traitées suivant les différentes modalités (voir ci-dessous). La modalité 8 a été ajoutée au dispositif expérimental afin d'évaluer l'efficacité du fongicide en absence de pluie.

Afin d'évaluer l'efficacité des différentes modalités à contrôler le mildiou, les feuilles sont prélevées sur les plantes traitées, inoculées en laboratoire à l'aide d'une suspension de sporanges de concentration connue et mises en incubation ; la capacité des sporanges à produire des nécroses sporulantes constituant l'indicateur d'efficacité.

### Dispositif expérimental et observations

### Les produits :

L'émulsion selon l'invention présente la composition suivante :

| Composition | % en poids |
|---|---|
| **Phase huileuse** | |
| huile de colza (huile végétale) | 26.985 |
| Mélange d'huile de colza éthoxylée et d'huile de ricin éthoxylée¹ | 4,6 |
| | |

| **Phase aqueuse** | |
|---|---|
| eau désionisée | 65,25 |
| Glycérol | 2,00 |
| Na⁺_{0,7} [(Si₈ Mg_{5,5} Li_{0,3})O₂₀(OH)₄]^{-0,7} | 0,95 |
| Dérivé isothiazolone | 0,2 |
| Mélange de tocophérols (anti-oxydant) | 0,015 |
| Total | 100,00 |

Le principe phytopharmaceutique (fongicide) est la Dithane^{®} WG (Dow AgroSciences B.V.) comprenant 75% de mancozèbe en tant que matière active.

La pomme de terre : la variété Bintje a été choisie pour sa sensibilité élevée au mildiou du feuillage. Le matériel végétal de départ est sain et est issu de minitubercules provenant d'une culture hydroponique, les minitubercules, préalablement pré-germés, ont été plantés dans un substrat à base de vermiculite, à raison d'un mini-tubercule par pot. Après 6 semaines de culture, les plantes sont traitées suivant les différentes modalités. Les plantes sont fertilisées à l'aide d'une solution nutritive à raison de 2 apports hebdomadaires.

La souche de mildiou, *Phytophthora infestans* : est une souche collectée en 2010 (référence : 10/044).

Le lessivage est une pluie correspondant à une précipitions de 20 mm. Elle est apportée sur les plantes traitées sur une période de 30 minutes.

### Description des facteurs de variabilité

La **modalité 1 (M1)** est le témoin négatif : les plantes sont traitées à l'eau et ne subissent pas le lessivage.
Les **modalités 2 (M2)** et **3 (M3)** correspondent aux plantes traitées avec l'émulsion selon l'invention à la dose de 1%, la première modalité ne subit pas le lessivage par la pluie alors que la seconde subit une pluie.
La **modalité 4 (M4)** correspond aux plantes traitées à l'aide du produit de contact à dose pleine (dose homolguée de Dithane^{®}) et subissant une pluie.
Les **modalités 5 (M5), 6 (M6)** et **7 (M7)** sont équivalentes à la modalité 4 auxquelles a été ajoutée une dose croissante de l'émulsion selon l'invention (respectivement 0,25%, 0,5% et 1% de la bouillie de traitement); les plantes ont également subit un lessivage par la pluie.
La modalité 8 à été ajoutée au dispositif expérimental ; elle est équivalente à la modalité 4 sans lessivage et correspond donc au témoin positif.
Un aperçu des différentes modalités testées est présenté dans le tableau suivant :

| Modalités | Produit | Dose | Produit | Pluie |
|---|---|---|---|---|
| 1 | Eau | - | - | NON |
| 2 | Em. Inv* | 1,00 % | - | NON |
| 3 | Em.Inv* | 1,00 % | - | OUI |
| 4 | - | | Mancozèbe | OUI |
| 5 | Em. Inv* | 0,25 % | M ancozèbe | OUI |
| 6 | Em. Inv* | 0,50 % | Mancozèbe | OUI |
| 7 | Em. Inv* | 1,00 % | Mancozèbe | OUI |
| 8 | - | | Mancozèbe | NON |

| | | | | |
|---|---|---|---|---|
| * Em. Inv = emulsion selon l'invention | | | | |

### Description des unités expérimentales:

L'unité expérimentale est constituée d'une plante recevant l'application d'un traitement (voir modalités).

Les observations destinées à vérifier l'efficacité des traitements pour le contrôle du mildiou de la pomme de terre sont réalisées sur une feuille complète de 5 folioles par plante.

L'inoculation est réalisée sur feuilles détachées ; elles sont déposées dans une boîte d'incubation fermée dont le fond est tapissé d'un buvard humide. Chacune des folioles est inoculée à l'aide d'une suspension de sporanges (concentration de 50000 sporanges/ml) à raison de 2 gouttes de 10 µl /foliole (de part et d'autre de la nervure centrale). La boîte d'incubation contenant la feuille est ensuite placée dans un incubateur réglé à 16°C et une photopériode de 16h.

7 jours après incubation, les feuilles sont observées. Les symptômes (taches et sporulation) sont notés suivant l'échelle de gravité (voir annexe 1).

Les observations sont réalisées sur demi-foliole (5 cotations par feuilles).

### Localisation de l'essai

L'essai a été mené au Centre Wallon de recherches agronomiques CRA-W dans le bâtiment Haute-Belgique.

### Mise en place et réalisation de l'essai

Semaine - 6 :
   - Préparation des pots et installation de 15 pots par bac
   - Remplissage des pots de vermiculite
   - Transplantation des minitubercules (bien presser le terreau pour assurer une bonne adhésion de la plante au substrat)
   - Elevage des plantules en chambre climatique (température : 20°C, photopériode : 12h/jour - 12h/nuit)
Semaine - 6 à Semaine 0 :
   - Arrosage + fertilisation
   - Tuteurage et contrôle de la vitalité des plantes
Jour J :
   - Préparation du matériel (pipette, tips, produits de traitement, eau distillé, falcon^{®}...)
   - Marquage des plantes
   - Préparation des solutions de traitement suivant les facteurs de variabilité 1 à 8
   - Traitement des plantes à raison de 7,5 ml par plante à l'aide d'un aérographe
   - Eviter les contacts entre les plantes ayant subi différents traitements
   - Acclimatation des plantes en serres
Jour J + 1 :
   - Simulation d'une pluie à raison de 20 mm sur une période de 30 minutes Séchage naturel des plantes
Jour J + 3 :
   - Préparation de l'inoculum à raison de 50.000 sporanges par ml.
   - Prélèvement des feuilles (5 folioles) à raison d'une feuille par plante (feuille supérieure)
   - Placement des feuilles en boîte d'incubation (contenant une serviette humide + 20 ml d'eau distillée stérile + ouate humide au niveau du pétiole)
   - Inoculation des feuilles à raison de 2 gouttes de 10µl par foliole (voir - Placement des boîtes dans l'incubateur (température : 16°C, photopériode : 16h/jour - 8h/nuit) (voir Annexe 5, Figure 5)
Jour J + 10 :
   - Observation des feuilles et notation des symptômes suivant une échelle de gravité (0 à 4) (voir ci-dessous). Les observations sont réalisées par foliole, soit 5 cotations par feuille. Au cas où la feuille présenterait des symptômes de pourriture pour cause d'excès d'humidité dans la chambre d'incubation, la cotation n'est pas possible ; une note NC est indiquée et ne rentre donc pas en compte dans le calcul de la moyenne.

### Echelle de cotation des symptômes et étude statistique

Note 0 : aucun symptôme visible sur la foliole
Note 1 : les symptômes se présentent sous forme d'une tache noire ou de ponctuations noires à l'endroit de l'inoculum. L'ensemble de ces ponctuations occupent une surface correspondant à celle d'une goutte d'inoculum. On n'observe pas de progression des nécroses au-delà du point d'inoculation.
Note 2 : les symptômes se présentent sous forme d'une tache noire de 0,5 à 1cm de diamètre. Son centre correspond à l'endroit où la goutte d'inoculum a été déposée. A la périphérie de la tache, la nécrose prend un aspect nébuleux, la coloration noire est moins intense. Aucune sporulation n'est visible à l'oeil nu.
Note 3 : les symptômes se présentent sous forme d'une tache noire de 0,5 à 1cm de diamètre (idem note 2) avec en périphérie la présence d'un léger feutrage mycélien (fructifications).
Note 4 : les symptômes se présentent sous forme d'une tache de 1 à 3cm. Une abondante sporulation est présente au sein et autour de la tache.
Note NC : une note ne peut être attribuée pour cause de développement de pourriture de la feuille (conditions de forte humidité).

Une analyse statistique selon le test de variance a également été réalisée afin d'évaluer la présence ou non de différences significatives entre le pourcentage d'infection obtenu selon les différentes modalités.

### Résultats de l'essai

| Modalités | Produit | Dose | Produit | Pluie | Produit | Cotation (moyenne) | Mesure stat |
|---|---|---|---|---|---|---|---|
| M1 | Eau | - | - | NON | Eau | 4,00 | a |
| M2 | Em. Inv* | 1,00 % | - | NON | Em. Inv | 4,00 | a |
| M3 | Em. Inv* | 1,00 % | - | OUI | Em. Inv | 4,00 | a |
| M4 | - | | Mancozèbe | OUI | - | 3,60 | a |
| M5 | Em. Inv* | 0,25 % | Mancozèbe | OUI | Em. Inv | 1,75 | C |
| M6 | Em. Inv* | 0,50 % | Mancozèbe | OUI | Em. Inv | 1,95 | C |
| M7 | Em. Inv* | 1,00 % | Mancozèbe | OUI | Em. Inv | 2,35 | C |
| M8 | - | | Mancozèbe | NON | - | 0,65 | d |

| | | | | | | | |
|---|---|---|---|---|---|---|---|
| * Em Inv = émulsion selon l'invention | | | | | | | |

L'objectif de l'essai était d'évaluer l'aptitude d'un mouillant à base d'huile à augmenter l'efficacité d'un fongicide de contact en présence d'une pluie sur le développement du mildiou de la pomme de terre.

Les résultats obtenus à partir des témoins positif et négatif sont conformes : le traitement des plantes à l'aide de Dithane (fongicide à base de mancozèbe, à pleine dose) contrôle les infections de mildiou lorsqu'il n'y a pas de pluie (modalité 8 ; note : 0,65) mais ne contrôle pas les plantes traitées lorsqu'une pluie lessive le fongicide (modalité 4 ; note : 3,60). Les plantes non protégées (traitement à l'eau et à l'huile) sont couvertes de fructifications de mildiou (modalités 1, 2, 3 et 4 ; note maximale de 4,00)

Les essais d'efficacité de traitement réalisés à l'aide du mouillant à base d'huile en association avec une dose pleine de fongicide et soumis à une pluie montrent des résultats d'efficacité supérieurs comparativement au fongicide appliqué seul. Les modalités en présence de dose croissante de mouillant en association au fongicide et avec lessivage sont 1,75, 1,95 et 2,35 comparativement au fongicide seul (note de 3,60).

Une analyse statistique des résultats de l'essai montre 3 groupes : le groupe 1 correspond à la modalité 8 où le contrôle du mildiou est quasi-total (mesure statistique d); le groupe 3 (mesure statistique a) correspond aux modalités 1, 2, 3, et 4 où le mildiou n'est pas contrôlé ; enfin, le groupe 2 (mesure statistique c) regroupe les modalités composées de fongicide en association au mouillant dont le contrôle est significativement supérieur au fongicide appliqué seul. Cependant, une dose croissante de mouillant dans la bouillie de traitement n'entraîne pas une augmentation de l'efficacité. Au contraire, la dose de 1% de mouillant présente un résultat d'efficacité inférieur aux doses respectives de 0,25 % et 0,5 %. En outre, certaines répétitions (modalité 5, modalité 6, modalité 7) ne montre pas de contrôle, le mildiou sporule sur tous les points d'inoculation.

En résumé, il semble que l'ajout de mouillant dans la bouillie de traitement apporte un effet bénéfique dans le contrôle du mildiou en cas de pluie et d'utilisation d'un fongicide de contact.

## Revendications

1. Utilisation d'une émulsion eau dans huile (e/h) ou huile dans l'eau (h/e) composée d'une phase huileuse comprenant une ou plusieurs huiles d'origine végétale brute ou raffinée, au moins un tensio-actif émulgateur non ionique et/ou anionique, et une phase aqueuse comprenant de l'eau et au moins un phyllosilicate, en tant que produit phytopharmaceutique à action mécanique ou en tant qu'adjuvant phytopharmaceutique destiné à être associé avec au moins un actif phytopharmaceutique.

2. Utilisation d'une émulsion eau dans huile (e/h) ou huile dans l'eau (h/e) selon la revendication 1 dans le cas où ladite émulsion est utilisée en tant qu'adjuvant phytopharmaceutique, dans laquelle l'actif phytopharmaceutique associé est choisi parmi : un insecticide, un fongicide, un herbicide, un bactéricide et un régulateur de croissance, ou un de leurs mélanges.

3. Utilisation d'une émulsion eau dans huile (e/h) ou huile dans l'eau (h/e) selon l'une des revendications précédentes, dans laquelle le phyllosilicate répond à la formule ci-dessous :
Na⁺_{0,7} [(Si₈Mg_{5,5}Li_{0,3})O₂₀(OH)₄]^{-0,7}

4. Utilisation d'une émulsion eau dans huile (e/h) ou huile dans l'eau (h/e) selon l'une des revendications précédentes, dans laquelle l'huile végétale est choisi parmi : l'huile de colza, l'huile de soja, l'huile de tournesol, l'huile d'olive, l'huile de palme, l'huile d'arachide, l'huile de jojoba, l'huile de coprah, et l'huile de jatropha ou un de leurs mélanges.

5. Utilisation d'une émulsion eau dans huile (e/h) ou huile dans l'eau (h/e) selon l'une des revendications précédentes, dans laquelle le tensio-actif émulgateur non ionique et/ou anionique est choisi parmi : un liquide à température ambiante, biodégradable et réalisé sur base végétale, et un biosurfactant, ou un de leurs mélanges.

6. Utilisation d'une émulsion eau dans huile (e/h) ou huile dans l'eau (h/e) selon la revendication 5, dans laquelle le tensio-actif émulgateur non ionique est choisi parmi un alcool gras éthoxylé, un ester d'acides gras et polyols, un ester de sorbitan, un ester de sorbitan polyéthoxylé, une huile de ricin éthoxylée, un alcool gras alcoxylé, un alkyl polyglucoside, un surfactant polymérique, un sel alcalin d'acides gras et résiniques, un alkylarylsulfonate, un alkylsulfosuccinate, un alkyl sulfate, un alkyl éther sulfate, un amide d'éther sulfate, et un dérivé dodécylbenzène sulfonique, les lécithines de soja, les lécithines d'oeufs, les surfactants polysaccharides-protéines, et les exopolysaccharides (EPS), ou un de leurs mélanges.

7. Utilisation d'une émulsion eau dans huile (e/h) ou huile dans l'eau (h/e) selon l'une des revendications précédentes, dans laquelle, par rapport au poids total de l'émulsion eau dans huile (e/h) ou huile dans l'eau (h/e), la ou les huiles représentent, en poids, 10 % à 80 %, le tensio-actif émulgateur représente, en poids, 0,5 % à 20 %, l'eau représente, en poids, 10 % à 90 % et le phyllosilicate représente en poids de 0,01 % à 20 %.

8. Utilisation d'une émulsion eau dans huile (e/h) ou huile dans l'eau (h/e) selon l'une des revendications précédentes, dans laquelle la phase huileuse comprend au moins un adjuvant oléophile.

9. Utilisation d'une émulsion eau dans huile (e/h) ou huile dans l'eau (h/e) selon l'une des revendications précédentes, dans laquelle la phase aqueuse comprend un adjuvant hydrophile.

10. Composition phytopharmaceutique comprenant un actif phytopharmaceutique et au moins un adjuvant phytopharmaceutique, **caractérisé en ce que** ledit au moins un adjuvant phytopharmaceutique est une émulsion eau dans huile (e/h) ou huile dans l'eau (h/e) composée d'une phase huileuse comprenant une ou plusieurs huiles d'origine végétale brute ou raffinée, au moins un tensio-actif émulgateur non ionique et/ou anionique, et d'une phase aqueuse, **caractérisée en ce que** la phase aqueuse comprend au moins un phyllosilicate.

11. Composition phytopharmaceutique selon la revendication 10, dans laquelle l'actif phytopharmaceutique est choisi parmi : un insecticide, un fongicide, un herbicide, un bactéricide, et un régulateur de croissance, ou un de leurs mélanges.

12. Composition phytopharmaceutique selon l'une des revendications 10 ou 11, dans laquelle le phyllosilicate répond à la formule ci-dessous : Na⁺_{0,7} [(Si₈Mg_{5,5}Li_{0,3})O₂₀(OH)₄]^{-0,7}.

13. Composition phytopharmaceutique selon l'une des revendications 10 à 12, dans laquelle l'huile végétale est choisie parmi : l'huile de colza, de soja, de tournesol, d'olive, de palme, d'arachide, de jojoba, de coprah, et l'huile de jatropha, ou un de leurs mélanges.

14. Composition phytopharmaceutique selon l'une des revendications 10 à 13, dans laquelle le tensio-actif émulgateur non ionique et/ou anionique est choisi parmi : un liquide à température ambiante, biodégradable et réalisé sur base végétale, et un biosurfactant, ou un de leurs mélanges.

15. Composition phytopharmaceutique selon la revendication 14, dans laquelle le tensio-actif émulgateur non ionique est choisi parmi un alcool gras éthoxylé, un ester d'acides gras et polyols, un ester de sorbitan, un ester de sorbitan polyéthoxylé, une huile de ricin éthoxylée, un alcool gras alcoxylé, un alkyl polyglucoside, un surfactant polymérique, un sel alcalin d'acides gras et résiniques, un alkylarylsulfonate, un alkylsulfosuccinate, un alkyl sulfate, un alkyl éther sulfate, un amide d'éther sulfate, et un dérivé dodécylbenzène sulfonique, les lécithines de soja, les lécithines d'oeufs, les surfactants polysaccharides-protéines, et les exopolysaccharides (EPS), ou un de leurs mélanges.

16. Composition phytopharmaceutique selon l'une des revendications 10 à 15, comprenant en outre de l'eau.

17. Composition phytopharmaceutique selon la revendication 16, dans laquelle, par rapport au poids total de la composition phytopharmaceutique, ledit au moins adjuvant phytopharmaceutique représente, en poids, 0,05% à 70% et ledit actif phytopharmaceutique représente 0,05% à 10% en poids et l'eau représente 20% à 99,9% en poids.

18. Utilisation de la composition phytopharmaceutique selon l'une des revendications 10 à 17 pour traiter les plantes contre des organismes nuisibles.

## Patentansprüche

1. Verwendung einer Wasser-in-Öl-Emulsion (W/O-Emulsion) oder ÖI-in-Wasser-Emulsion (O/W-Emulsion), die sich aus einer Ölphase, die ein oder mehrere rohe oder gereinigte Öle pflanzlichen Ursprungs, mindestens einen nichtionischen und/oder anionischen Tensidemulgator umfasst, und einer Wasserphase, die Wasser und mindestens ein Phyllosilikat als phytopharmazeutisches Produkt mit mechanischer Aktion oder als phytopharmazeutischen Hilfsstoff umfasst, der zur Verbindung mit mindestens einem phytopharmazeutischen Wirkstoff bestimmt ist, zusammensetzt.

2. Verwendung einer Wasser-in-ÖI-Emulsion (W/O-Emulsion) oder ÖI-in-Wasser-Emulsion (O/W-Emulsion) nach Anspruch 1 für den Fall, dass die Emulsion als phytopharmazeutischer Hilfsstoff verwendet wird, wobei der verbundene phytopharmazeutische Wirkstoff aus einem Insektizid, einem Fungizid, einem Herbizid, einem Bakterizid und einem Wachstumsregulator oder einem ihrer Gemische ausgewählt ist.

3. Verwendung einer Wasser-in-ÖI-Emulsion (W/O-Emulsion) oder ÖI-in-Wasser-Emulsion (O/W-Emulsion) nach einem der vorangehenden Ansprüche, wobei das Phyllosilikat der folgenden Formel entspricht:
Na⁺_{0,7} [(Si₈Mg_{5,5}Li_{0,3})O₂₀(OH)₄]^{-0,7}.

4. Verwendung einer Wasser-in-ÖI-Emulsion (W/O-Emulsion) oder ÖI-in-Wasser-Emulsion (O/W-Emulsion) nach einem der vorangehenden Ansprüche, wobei das Pflanzenöl aus dem Rapsöl, dem Sojaöl, dem Sonnenblumenöl, dem Olivenöl, dem Palmöl, dem Erdnussöl, dem Jojobaöl, dem Kopraöl und dem Jatrophaöl oder einem ihrer Gemische ausgewählt ist.

5. Verwendung einer Wasser-in-ÖI-Emulsion (W/O-Emulsion) oder ÖI-in-Wasser-Emulsion (O/W-Emulsion) nach einem der vorangehenden Ansprüche, wobei der nichtionische und/oder anionische Tensidemulgator aus einer biologisch abbaubaren und auf pflanzlicher Basis hergestellten Flüssigkeit bei Umgebungstemperatur und einem biologischen Oberflächenaktivstoff oder einem ihrer Gemische ausgewählt ist.

6. Verwendung einer Wasser-in-ÖI-Emulsion (W/O-Emulsion) oder ÖI-in-Wasser-Emulsion (O/W-Emulsion) nach Anspruch 5, wobei der nichtionische Tensidemulgator aus einem ethoxyliertem Fettalkohol, einem Fett- und Polyolsäureester, einem Sorbitanester, einem polyethoxyliertem Sorbitanester, einem ethoxyliertem Rizinusöl, einem alkoxyliertem Fettalkohol, einem Polyglucosidalkyl, einem Polymer-Oberflächenaktivstoff, einem Fett- und Harzsäure-Alkalisalz, einem Alkylarylsulfonat, einem Alkylsulfosuccinat, einen Alkylsulfat, einem Alkylethersulfat, einem Ethersulfatamid, einem Dodecylbenzolsulfonderivat, den Sojalecithinen, den Eilecithinen, den Polysaccharid-Protein-Oberflächenaktivstoffen und den Exopolysacchariden (EPS) oder einem ihrer Gemische ausgewählt ist.

7. Verwendung einer Wasser-in-Öl-Emulsion (W/O-Emulsion) oder ÖI-in-Wasser-Emulsion (O/W-Emulsion) nach einem der vorangehenden Ansprüche, wobei das oder die Öle im Verhältnis zum Gesamtgewicht der Wasser-in-Öl-Emulsion (W/O-Emulsion) oder ÖI-in-Wasser-Emulsion (OM/-Emulsion) 10 bis 80 Gew.-% darstellen, der Tensidemulgator 0,5 bis 20 Gew.-% darstellt, das Wasser 10 bis 90 Gew.-% darstellt und das Phyllosilikat 0,01 bis 20 Gew.-% darstellt.

8. Verwendung einer Wasser-in-ÖI-Emulsion (W/O-Emulsion) oder Öl-in-Wasser-Emulsion (O/W-Emulsion) nach einem der vorangehenden Ansprüche, wobei die Ölphase mindestens einen oleophilen Hilfsstoff umfasst.

9. Verwendung einer Wasser-in-ÖI-Emulsion (W/O-Emulsion) oder Öl-in-Wasser-Emulsion (O/W-Emulsion) nach einem der vorangehenden Ansprüche, wobei die Wasserphase einen hydrophilen Hilfsstoff umfasst.

10. Phytopharmazeutische Zusammensetzung, die einen phytopharmazeutischen Wirkstoff und mindestens einen phytopharmazeutischen Hilfsstoff umfasst, **dadurch gekennzeichnet, dass** der mindestens eine phytopharmazeutische Hilfsstoff eine Wasser-in-ÖI-Emulsion (W/O-Emulsion) oder ÖI-in-Wasser-Emulsion (O/W-Emulsion) ist, die sich aus einer Ölphase, die ein oder mehrere rohe oder gereinigte Öle pflanzlichen Ursprungs, mindestens einen nichtionischen und/oder anionischen Tensidemulgator umfasst, und einer Wasserphase zusammensetzt, **dadurch gekennzeichnet, dass** die Wasserphase mindestens ein Phyllosilikat umfasst.

11. Phytopharmazeutische Zusammensetzung nach Anspruch 10, wobei der phytopharmazeutische Wirkstoff aus einem Insektizid, einem Fungizid, einem Herbizid, einem Bakterizid und einem Wachstumsregulator oder einem ihrer Gemische ausgewählt ist.

12. Phytopharmazeutische Zusammensetzung nach einem der Ansprüche 10 oder 11, wobei das Phyllosilikat der folgenden Formen entspricht:
Na⁺_{0,7} [(Si₈Mg_{5,5}Li_{0,3})O₂₀(OH)₄]^{-0,7}.

13. Phytopharmazeutische Zusammensetzung nach einem der Ansprüche 10 bis 12, wobei das Pflanzenöl aus dem Rapsöl, dem Sojaöl, dem Sonnenblumenöl, dem Olivenöl, dem Palmöl, dem Erdnussöl, dem Jojobaöl, dem Kopraöl und dem Jatrophaöl oder einem ihrer Gemische ausgewählt ist.

14. Phytopharmazeutische Zusammensetzung nach einem der Ansprüche 10 bis 13, wobei der nichtionische und/oder anionische Tensidemulgator aus einer biologisch abbaubaren und auf pflanzlicher Basis hergestellten Flüssigkeit bei Umgebungstemperatur und einem biologischen Oberflächenaktivstoff oder einem ihrer Gemische ausgewählt ist.

15. Phytopharmazeutische Zusammensetzung nach Anspruch 14, wobei der nichtionische Tensidemulgator aus einem ethoxyliertem Fettalkohol, einem Fett- und Polyolsäureester, einem Sorbitanester, einem polyethoxyliertem Sorbitanester, einem ethoxyliertem Rizinusöl, einem alkoxyliertem Fettalkohol, einem Polyglucosidalkyl, einem Polymer-Oberflächenaktivstoff, einem Fett- und Harzsäure-Alkalisalz, einem Alkylarylsulfonat, einem Alkylsulfosuccinat, einen Alkylsulfat, einem Alkylethersulfat, einem Ethersulfatamid, einem Dodecylbenzolsulfonderivat, den Sojalecithinen, den Eilecithinen, den Polysaccharid-Protein-Oberflächenaktivstoffen und den Exopolysacchariden (EPS) oder einem ihrer Gemische ausgewählt ist.

16. Phytopharmazeutische Zusammensetzung nach einem der Ansprüche 10 à 15, die ferner Wasser umfasst.

17. Phytopharmazeutische Zusammensetzung nach Anspruch 16, wobei der mindestens eine phytopharmazeutische Hilfsstoff im Verhältnis zum Gesamtgewicht der phytopharmazeutischen Zusammensetzung 0,05 bis 70 Gew.-% darstellt und der phytopharmazeutische Wirkstoff 0,05 bis 10 Gew.-% darstellt und das Wasser 20 bis 99,9 Gew.-% darstellt.

18. Verwendung der phytopharmazeutischen Zusammensetzung nach einem der Ansprüche 10 bis 17 zur Behandlung von Pflanzen gegen schädliche Organismen.

## Claims

1. The use of a water-in-oil (w/o) or oil-in-water (o/w) emulsion composed of an oily phase comprising one or more oils of crude or refined vegetable origin, and at least one nonionic and/or anionic emulsifying surfactant, and an aqueous phase comprising water and at least one phyllosilicate, as a phytopharmaceutical product with mechanical action or as a phytopharmaceutical adjuvant intended to be combined with at least one phytopharmaceutical active agent.

2. The use of a water-in-oil (w/o) or oil-in-water (o/w) emulsion as claimed in claim 1, in the case where said emulsion is used as a phytopharmaceutical adjuvant, wherein the combined phytopharmaceutical active agent is chosen from: an insecticide, a fungicide, a herbicide, a bactericide and a growth regulator, or a mixture thereof.

3. The use of a water-in-oil (w/o) or oil-in-water (o/w) emulsion as claimed in either of the preceding claims, wherein the phyllosilicate corresponds to the formula below:
Na⁺_{0.7} [(Si₈Mg_{5.5}Li_{0.3})O₂₀(OH)₄]^{-0.7}.

4. The use of a water-in-oil (w/o) or oil-in-water (o/w) emulsion as claimed in one of the preceding claims, wherein the vegetable oil is chosen from: rapeseed oil, soybean oil, sunflower oil, olive oil, palm oil, groundnut oil, jojoba oil, coconut oil and jatropha oil, or a mixture thereof.

5. The use of a water-in-oil (w/o) or oil-in-water (o/w) emulsion as claimed in one of the preceding claims, wherein the nonionic and/or anionic emulsifying surfactant is chosen from: a liquid at ambient temperature, which is biodegradable and vegetable-based, and a biosurfactant, or a mixture thereof.

6. The use of a water-in-oil (w/o) or oil-in-water (o/w) emulsion as claimed in claim 5, wherein the nonionic emulsifying surfactant is chosen from an ethoxylated fatty alcohol, an ester of fatty acids and polyols, a sorbitan ester, a polyethoxylated sorbitan ester, an ethoxylated castor oil, an alkoxylated fatty alcohol, an alkyl polyglucoside, a polymeric surfactant, an alkali metal salt of fatty and resin-based acids, an alkylaryl sulfonate, an alkylsulfosuccinate, an alkyl sulfate, an alkyl ether sulfate, an amide ether sulfate, and a sulfonic dodecylbenzene derivative, soybean lecithins, egg lecithins, polysaccharide-protein surfactants, and exopolysaccharides (EPSs), or a mixture thereof.

7. The use of a water-in-oil (w/o) or oil-in-water (o/w) emulsion as claimed in one of the preceding claims, wherein, relative to the total weight of the water-in-oil (w/o) or oil-in-water (o/w) emulsion, the oil(s) represent(s) 10% to 80% by weight, the emulsifying surfactant represents 0.5% to 20% by weight, the water represents 10% to 90% by weight and the phyllosilicate represents from 0.01% to 20% by weight.

8. The use of a water-in-oil (w/o) or oil-in-water (o/w) emulsion as claimed in one of the preceding claims, wherein the oily phase comprises at least one oleophilic adjuvant.

9. The use of a water-in-oil (w/o) or oil-in-water (o/w) emulsion as claimed in one of the preceding claims, wherein the aqueous phase comprises a hydrophilic adjuvant.

10. A phytopharmaceutical composition comprising a phytopharmaceutical active agent and at least one phytopharmaceutical adjuvant, **characterized in that** said at least one phytopharmaceutical adjuvant is a water-in-oil (w/o) or oil-in-water (o/w) emulsion composed of an oily phase comprising one or more oils of crude or refined vegetable origin, and at least one nonionic and/or anionic emulsifying surfactant, and of an aqueous phase, **characterized in that** the aqueous phase comprises at least one phyllosilicate.

11. The phytopharmaceutical composition as claimed in claim 10, wherein the phytopharmaceutical active agent is chosen from: an insecticide, a fungicide, a herbicide, a bactericide and a growth regulator, or a mixture thereof.

12. The phytopharmaceutical composition as claimed in either of claims 10 and 11, wherein the phyllosilicate corresponds to the formula below:
Na⁺_{0.7} [(Si₈Mg_{5.5}Li_{0.3})O₂₀(OH)₄]^{-0.7}.

13. The phytopharmaceutical composition as claimed in one of claims 10 to 12, wherein the vegetable oil is chosen from: rapeseed oil, soybean oil, sunflower oil, olive oil, palm oil, groundnut oil, jojoba oil, coconut oil and jatropha oil, or a mixture thereof.

14. The phytopharmaceutical composition as claimed in one of claims 10 to 13, wherein the nonionic and/or anionic emulsifying surfactant is chosen from: a liquid at ambient temperature, which is biodegradable and vegetable-based, and a biosurfactant, or a mixture thereof.

15. The phytopharmaceutical composition as claimed in claim 14, wherein the nonionic emulsifying surfactant is chosen from an ethoxylated fatty alcohol, an ester of fatty acids and polyols, a sorbitan ester, a polyethoxylated sorbitan ester, an ethoxylated castor oil, an alkoxylated fatty alcohol, an alkyl polyglucoside, a polymeric surfactant, an alkali metal salt of fatty and resin-based acids, an alkylaryl sulfonate, an alkylsulfosuccinate, an alkyl sulfate, an alkyl ether sulfate, an amide ether sulfate, and a sulfonic dodecylbenzene derivative, soybean lecithins, egg lecithins, polysaccharide-protein surfactants, and exopolysaccharides (EPSs) or a mixture thereof.

16. The phytopharmaceutical composition as claimed in one of claims 10 to 15, also comprising water.

17. The phytopharmaceutical composition as claimed in claim 16, wherein, relative to the total weight of the phytopharmaceutical composition, said at least one phytopharmaceutical adjuvant represents 0.05% to 70% by weight and said phytopharmaceutical active agent represents 0.05% to 10% by weight and the water represents 20% to 99.9% by weight.

18. The use of the phytopharmaceutical composition as claimed in one of claims 10 to 17, for treating plants against harmful organisms.
